# DEMANDE DE BREVET EUROPEEN

(11) **EP 0 545 752 A1**
(43) Date de publication de la demande: **09.06.1993**
(21) Numéro de dépôt: 92403030.7
(22) Date de dépôt: 10.11.1992
(51) Int. Cl.: G01F 7/00

(54) **Procédé et dispositif de mesure du débit de conduites transportant un fluide de régulation thermique**

(30) Priorité: 02.12.1991 FR 9115051
(71) Demandeur: COMAP, F-69008 Lyon (FR)
(72) Inventeur: Beltz, Jacques, F-54700 Blenod lès Pont a Mousson (FR); Capla, Thierry, F-54700 Blenod lès Pont a Mousson (FR); Heidinger, Bruno, F-54700 Pont a Mousson (FR)
(74) Mandataire: Rodhain, Claude

(57) **Abrégé**

Procédé et dispositif de mesure du débit de conduites transportant un fluide de régulation thermique, notamment des colonnes d'eau de chauffage central, réalisé au moyen d'un circuit (1) comprenant un dispositif de réglage du débit (5) comportant deux prises de pression (14) connectées chacune à un transducteur (41, 42) connecté à un étage d'entrée (3) connecté à un système d'amplification à plusieurs voies de gains différents, chaque voie étant reliée à une entrée d'un convertisseur analogique numérique.

Application au réglage du débit.

## Description

La présente invention se rapporte à un procédé pour la mesure en vue du réglage du débit d'un fluide de régulation thermique transporté dans des conduites.

L'invention se rapporte également aux moyens pour la mise en oeuvre de ce procédé.

Plus particulièrement mais non limitativement, l'invention concerne un procédé de mesure en vue du réglage ou de la régulation du débit d'eau chaude circulant dans une conduite d'alimentation en fluide chaud entre le générateur et les radiateurs d'une installation de chauffage central qui comprend également une vanne permettant la régulation ou le réglage.

Dans ce domaine, il est connu d'employer des dispositifs de régulation thermique ou des vannes permettant l'équilibrage de la distribution de chaleur entre les différentes entrées d'un ensemble immobilier en utilisant les vannes mentionnées ci-dessus formant des organes déprimogènes, ce qui permet de mesurer le débit par une mesure du différentiel de pression. (Voir par exemple le brevet publié sous le n° 2 211 108 et le modèle d'utilité de la Demanderesse déposé en R.F.A. sous le n° G 90 05 040.1).

Cette solution a donné satisfaction, mais son emploi n'est basé que sur des calculs théoriques. Ceci impose que l'installation pratique doit être strictement conforme à l'installation théorique, ce qui n'est jamais le cas dans la réalité. On a aussi constaté dans des installations existantes, des débits effectifs dans des colonnes d'eau de 200 % du débit théorique nécessaire parce que des installateurs ne savent pas faire les mesures.

Il est particulièrement avantageux pour effectuer la mesure de différence de pression en vue du réglage du débit de conduites transportant un fluide de régulation thermique, telle que définie ci-dessus, d'utiliser un circuit comprenant au moins un dispositif de réglage du débit comportant au moins deux prises de pression connectées chacune à au moins un transducteur connecté à un étage d'entrée (voir brevet demandé en France par la Demanderesse sous le n° 9007206).

Toutefois, ce procédé ne permet pas un réglage automatique de la valeur mesurée en fonction du débit.

L'invention a pour but de perfectionner la technique de mesure de différence de pression en vue du réglage du débit, de façon à remédier à ces inconvénients.

A cet effet, l'invention a pour objet un procédé du type précité, dans lequel l'étage d'entrée est connecté à un système d'amplification à plusieurs voies de gains différents, chaque voie étant reliée à une entrée d'un convertisseur analogique numérique.

Suivant un mode de mise en oeuvre, on effectue une mesure des décalages à l'origine provoqués par les transducteurs connectés aux prises de pression et une mesure de la différence de pression.

En vue d'obtenir une valeur d'une précision proportionnelle à la variation de pression due à la différence de débit, le procédé comprend une sélection de gain, par la lecture successive par le microcontrôleur de chaque voie jusqu'à obtenir le calibre correspondant à une valeur disponible en partant du plus petit calibre.

Dans une variante de réalisation avantageuse, pour améliorer la stabilité thermique, le procédé comprend une compensation de la valeur de la tension électrique mesurée en fonction de la température des transducteurs.

Pour améliorer la qualité de la mesure, la pente des transducteurs est étalonnée. La pente d'un transducteur est le coefficient de proportionnalité entre la pression hydraulique mesurée et la tension électrique fournie à la sortie du transducteur. Afin d'obtenir une valeur moyenne du débit lors de la mise en oeuvre de la technique selon l'invention, le bruit hydraulique est filtré électroniquement.

Le microcontrôleur permet, par le biais d'une programmation appropriée de la mémoire, de corriger la tension de décalage d'entrée des amplificateurs opérationnels et de leurs dérives et, de ré-étalonner à chaque mesure la chaîne de conversion analogique numérique des mesures formée par la combinaison de l'étage d'entrée et du convertisseur.

En vue d'utiliser une technologie éprouvée de faible coût permettant de mesurer une grande gamme de variétés de débits en réglant automatiquement plusieurs gammes, le dispositif de mesure du débit comporte un circuit dont la partie électronique est constituée d'un moyen de réglage du débit, des transducteurs, un étage d'entrée, un convertisseur, au moins un clavier de commande, au moins un afficheur permettant d'afficher successivement le débit, la variation de pression entre deux prises de pression, le réglage à effectuer, au moins une mémoire et un microcontrôleur.

Afin de diminuer les temps de réponse, le dispositif selon l'invention comprend au moins, un filtre et plusieurs voies d'amplification ayant chacune un gain différent, chaque voie étant reliée à une entrée du convertisseur.

De manière à utiliser une grande variété de vannes, la mémoire est programmée de manière à sélectionner et enregistrer automatiquement la voie permettant la meilleure précision de la mesure en proportion du débit.

Dans le but d'obtenir une meilleure reproductibilité des mesures, le dispositif comprend au moins une sonde de température, associée à un amplificateur.

En variante, le dispositif dans lequel l'indicateur de la position relative du clapet par rapport à son siège est un répétiteur électronique.

L'invention a encore pour objet un dispositif par laquelle le dialogue entre le circuit et l'utilisateur s'effectue au moyen d'un menu.

Les caractéristiques et avantages de l'invention ressortiront de la description qui va suivre, donnée à titre d'exemple non limitatif et en regard des figures annexées, sur lesquelles :

La Fig. 1 représente un circuit schématique d'un dispositif permettant la mise en oeuvre du procédé selon l'invention.

La Fig. 2 est une vue en coupe d'un robinet de pied de colonne à réglage manuel avec prises de pression permettant la mise en oeuvre de l'invention.

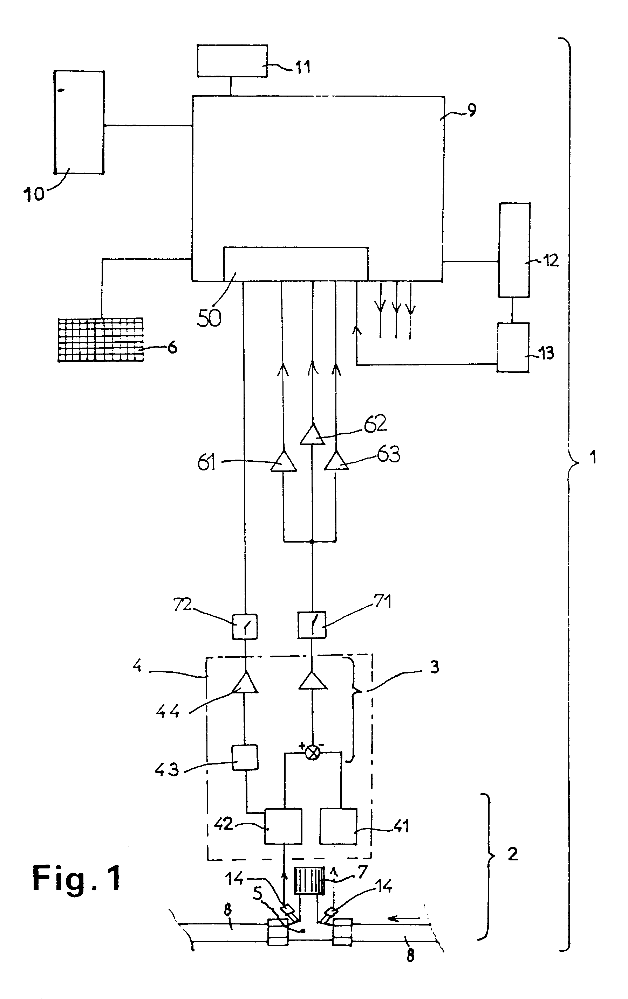

Le circuit 1, représenté à la Fig. 1, dont le fonctionnement permet la mise en oeuvre du procédé selon l'invention, est constitué d'un dispositif 5 de réglage du débit de fluide, monté sur la canalisation 8 d'alimentation en fluide, le dispositif 5 étant d'un type quelconque approprié tel qu'une vanne de régulation thermique. Au moyen de deux prises de pression 14, ce dispositif 5 est connecté à la partie hydraulique 2 du circuit 1 comprenant deux transducteurs 41 et 42 permettant la connexion à un étage d'entrée 3 constituant une portion de la partie électronique du circuit 1. Une sonde de température 43 est connectée à un des transducteurs 14 et à un amplificateur formant conditionneur 44. Les transducteurs 41 et 42, la sonde de température 3 et le conditionneur 44 peuvent être fixés dans un boitier métallique 4 formant un écran électromagnétique.

Le circuit 1 comprend un clavier 6 comprenant des touches de commandes, un afficheur 10 permettant l'affichage de caractères, une mémoire 11, une alimentation 12 branchée sur pile 13. Ledit circuit 1 comprend également trois amplificateurs 61, 62, 63, de gains différents, deux filtres 71, 72, un microcontrôleur 9, comprenant un chronomètre, une mémoire et un convertisseur analogique numérique 50. L'étage d'entrée 3 est connecté au filtre 71, lui-même connecté à chacun des amplificateurs 61, 62, 63. Le conditionneur 44 est connecté au filtre 72. La pile 13, les amplificateurs 61, 62, 63 et le filtre 72 sont connectés respectivement au convertisseur analogique numérique 50. Le clavier 6, l'afficheur 10 et la mémoire 11 sont branchés chacun au microcontrôleur 9.

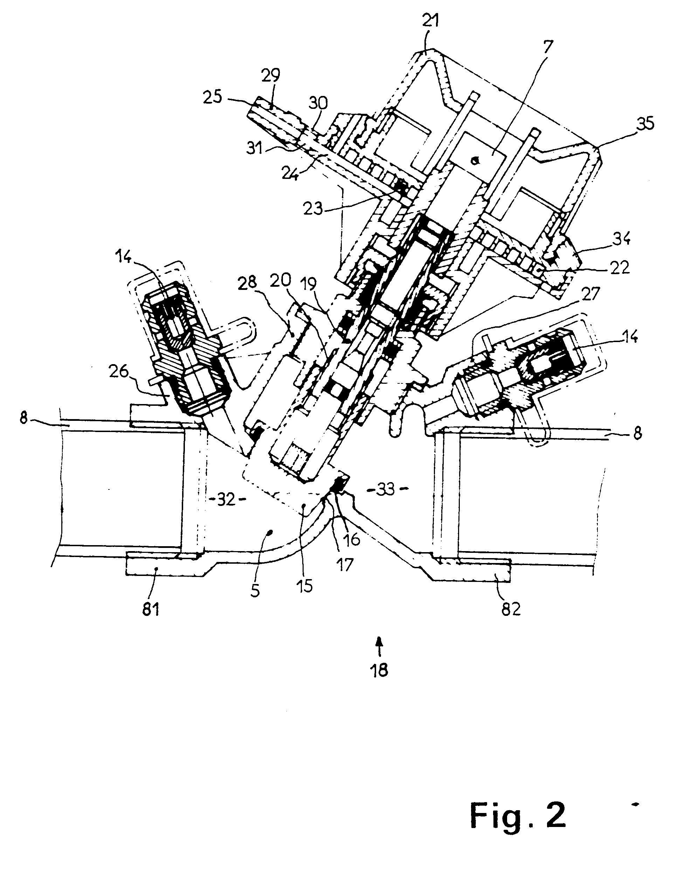

Comme le montre plus particulièrement la Fig. 2, la vanne 5 pour colonne de transport de fluide thermique comporte un corps tubulaire 18 comprenant cinq tubulures 26, 27, 28, 81, 82 raccordées respectivement à deux prises de pression 14, à un volant 7 de réglage et au tronçon 8 de conduite de fluide pour régulation thermique.

Les tubulures 26 et 81 débouchent dans une chambre amont 32, les tubulures 27, 28 et 82 dans une chambre en aval 33 séparée de la précédente par une cloison présentant une ouverture qui offre un siège 16 à un clapet 15 qui vient fermer le robinet 5, en butée étanche sur le siège 16 ; la combinaison clapet 15 et siège 16 forme un organe déprimogène 17. Le clapet 15 est maintenu et guidé en translation par l'intermédiaire de l'extrémité filetée 20 du cylindre creux 19. Le cylindre 19 est lié en rotation à un volant 21 à poignée 35 cannelée et sensiblement cylindrique de réglage manuel de la hauteur du clapet 15. Au niveau du plan contenant un rebord circulaire 34 externe à la poignée 35, le volant 21 présente une rainure interne 22 en forme de spirale. Dans la rainure 22, un doigt 23 fixé à une languette graduée 24, est entraînée en translation suivant l'axe du logement 25 de la languette graduée 24 par la rotation de la rainure 22 du volant 21. Le volant 21 comporte à sa partie la plus près du corps 18, qui sera appelée ci-dessous face inférieure, une excroissance 29 qui contient une partie d'extrémité du logement 25 de la languette graduée 24, cette excroissance 29 est sensiblement plane et coplanaire avec la rainure 22. L'excroissance 29 présente deux jours 30 et 31 en vis-à-vis l'un avec l'autre, chacun des jours 30 et 31, formant une ouverture de la dimension de l'un des chiffres de dizaines gradués sur la languette 24, étant situés sur une des deux faces de l'excroissance 29. Les dizaines sont affichées et visibles sur la face supérieure et sur la face inférieure du volant 21. Les chiffres d'unités sont affichés sur le rebord 34 et sont tous visibles du côté extérieur à la canalisation et, un jour à la partie inférieure du volant 21 permet d'afficher un chiffre d'unité. Lesdits chiffres de dizaines et d'unités indiquent la position du clapet par rapport au siège 16.

Les prises de pressions 14 sont identiques et sont connectées au corps 18 par une fixation à la tubulure 26 et à la tubulure 27 respectivement. Les prises de pression 14 et le volant de réglage 21 sont fixés du côté du corps 18 de la vanne 5, tourné en dehors du mur sur lequel est montée la canalisation d'alimentation en fluide 8.

L'installation décrite est d'une grande simplicité, les transducteurs 41 et 42 transforment la pression hydraulique en tensions électriques transmises à l'étage d'entrée 3 du circuit 1. La tension électrique est transmise aux amplificateurs 61, 62, 63 après avoir été filtrée par le filtre 71.

Chaque amplificateur 61, 62, 63 étant d'un gain différent, la valeur de l'amplificateur entre l'entrée et la sortie de l'amplificateur est différente. Ainsi, le convertisseur analogique numérique 50 peut choisir automatiquement la voie provenant d'un amplificateur d'une précision correspondant au calibre.

Le calibre est la plus grande valeur de variation de pression entre les transducteurs amont 41 et aval 42.

Le choix de la voie effectué par le microcontrôleur 50 permet une précision de mesure en rapport avec le calibre.

Cette précision est en escalier, chaque amplificateur de gain étant d'une précision constante.

Donc pour un calibre faible, le microcontrôleur 50 choisit une voie présentant un gain important et inversement pour un calibre faible, le microcontrôleur 50 choisit une voie présentant un gain faible.

Le choix de la voie par le microcontrôleur 50 s'effectue de la manière suivante ; le microcontrôleur 50 sélectionne la voie qui présente le plus grand gain.

Si le débit est faible, l'amplification permet une mesure d'une tension précise qui permet l'affichage d'une valeur représentant le débit.

Si le débit est trop important, l'amplificateur est saturé et il n'est pas possible d'utiliser la tension fournie au microcontrôleur 50 pour afficher une valeur correcte.

Dans ce cas le microcontrôleur 50 enregistre la tension fournie par la voie dont le gain est moins important, dans l'exemple selon la Fig. 1, le gain moyen.

Si l'amplificateur a gain moyen est lui aussi saturé, le microcontrôleur 50 enregistre la tension de la voie présentant le gain le plus faible. Dans ce troisième cas le débit est très important.

En conséquence, la valeur affichée du débit est comprise dans une fourchette constante en proportion du calibre. Plus le calibre est faible, plus la valeur affichée sera précise.

Le procédé selon l'invention s'applique à la mesure du débit de fluide pour régulation thermique en vue du réglage dudit débit.

L'opérateur règle la position du robinet en utilisant cet affichage de la différence de pression et les graduations en dizaines et unités de la vanne 5.

La mesure du débit de fluide de régulation thermique, se réalise automatiquement au moyen d'un circuit transformant la pression en tension électrique. Ensuite le convertisseur analogique numérique 50 transforme en valeur binaire. Puis le microcontrôleur 9 calcule au moyen d'un programme, la valeur du débit à la position du clapet 15 et de la valeur binaire. De plus, le microcontrôleur 9 peut afficher soit le débit pour une position du clapet 15 donnée, soit afficher la position du clapet 15 permettant d'obtenir le débit souhaité ou encore il peut afficher la variation de pressions à l'amont et à l'aval du clapet 15. Ledit programme permettant au microcontrôleur 9 d'afficher les valeurs calculées.

La position du robinet est enregistrée au moyen du clavier.

Dans une variante avantageuse permettant une lecture en continue du débit, l'indicateur de la position relative du clapet 15 par rapport à son siège 16 est un répétiteur électronique.

Pour limiter le nombre de touches sur le clavier et rendre plus facile l'utilisation du dispositif selon l'invention et diminuer les possibilités d'erreur, le dialogue entre le circuit et l'utilisateur s'effectue au moyen d'un menu. Ainsi, le dispositif propose à l'utilisateur de choisir entre plusieurs options. En outre, le dispositif guide l'utilisateur dans les démarches à suivre en affichant des ordres ou des questions sur l'afficheur 40. Les ordres ou les questions sont acquittés par l'utilisateur au moyen du clavier 6.

## Revendications

**1.-** Procédé pour la mesure en vue du réglage du débit de conduites transportant un fluide de régulation thermique, notamment des colonnes d'eau de chauffage central, réalisé au moyen d'un circuit comprenant au moins un dispositif de réglage du débit (5) comportant au moins deux prises de pression (14) connectées chacune à au moins un transducteur (41, 42) connecté à un étage d'entrée (3), caractérisé en ce que l'étage d'entrée (3) est connecté à un système d'amplification à plusieurs voies de gains différents, chaque voie étant reliée à une entrée d'un convertisseur analogique numérique.

**2.-** Procédé selon la revendication 1 caractérisé en ce qu'il comporte les étapes suivantes :
- une mesure des décalages à l'origine provoquées par les transducteurs (41, 42) connectés aux prises de pression (14) et,
- une mesure de la différence de pression.

**3.-** Procédé selon la revendication 1 ou 2 caractérisé en ce qu'il comprend une sélection de gain par la lecture successive par le microcontrôleur de chaque voie jusqu'à obtenir le calibre correspondant à une valeur disponible en partant du plus petit calibre.

**4.-** Procédé selon la revendication 1, 2 ou 3 caractérisé en ce qu'il comprend une compensation de la valeur de la tension électrique mesurée en fonction de la température des transducteurs (41, 42).

**5.-** Procédé selon l'une des revendications 1 à 4, caractérisé en ce que la pente des transducteurs est étalonnée.

**6.-** Procédé selon l'une des revendications 1 à 5, caractérisé en ce que le bruit hydraulique est filtré électroniquement.

**7.-**Dispositif pour la mise en oeuvre du procédé selon l'une des revendications précédentes constitué par un circuit comprenant un moyen de réglage du débit (5) des transducteurs (41, 42), un étage d'entrée (3), un convertisseur (4), au moins un clavier de commande (6), au moins un afficheur (10) permettant d'afficher successivement le débit, la variation de pression entre deux prises de pression (14), le réglage à effectuer, au moins une mémoire (11) et un microcontrôleur (9) permettant de gérer toutes les acquisitions et au moins une alimentation électrique (12), caractérisé en ce que le convertisseur est intégré au microcontrôleur.

**8.-** Dispositif selon la revendication 7 caractérisé en ce qu'il comprend au moins, un filtre et plusieurs voies d'amplification ayant chacune un gain différent, chaque voie étant reliée à une entrée du convertisseur.

**9.-** Dispositif selon la revendication 7 caractérisé en ce que sa mémoire (11) est programmée de manière à sélectionner et enregistrer automatiquement la voie permettant la meilleure précision de la mesure en proportion du débit.

**10.-** Dispositif selon la revendication 7 caractérisé en ce que la même carte électronique comprend au moins une sonde de température (13) un conditionneur et l'étage d'entrée (3) des résistances, un amplificateur.

**11.-** Dispositif pour la mise en oeuvre du procédé selon la revendication 4 caractérisé en ce qu'il comporte un dispositif de mesure de la température.

**12.-** Dispositif de réglage du débit selon l'une des revendications 7 à 11 caractérisé en ce que l'indicateur de la position relative du clapet (15) par rapport à son siège (16) est un répétiteur électronique.

**13.-** Dispositif selon la revendication 12, caractérisé en ce que le dialogue entre le circuit (1) et l'utilisateur s'effectue au moyen d'un menu.

**14.-** Dispositif selon la revendication 12 caractérisé en ce qu'il affiche des ordres ou des questions sur l'afficheur (10) et/ou lesdits ordres aux questions étant acquittés par l'utilisateur au moyen du clavier de commande (6).

**15.-** Installation de mesure et du réglage du débit de conduites transportant un fluide de régulation thermique, du type comprenant un circuit dans lequel sont connectés des composants électroniques et une vanne d'équilibrage comportant un indicateur de la position relative du clapet par rapport à son siège et des prises de pression (14) reliées au circuit ledit circuit constituant un dispositif formé d'au moins des amplificateurs, d'un filtre, d'un microcontrôleur, d'un convertisseur, d'un afficheur, d'un clavier, d'une mémoire, d'une sonde de température, de mesure du débit, lesdites prises de pression (14) étant respectivement en amont et en aval du clapet (15).
